# DEMANDE DE BREVET EUROPEEN

(11) **EP 4 016 678 A1**
(43) Date de publication de la demande: **22.06.2022**
(21) Numéro de dépôt: 21216027.9
(22) Date de dépôt: 20.12.2021
(51) Int. Cl.: H01M 8/0258, H01M 8/0202, H01M 8/1018, H01M 8/10

(54) **PROCÉDÉ DE FABRICATION D'UN GUIDE D'ÉCOULEMENT À CANAL STRUCTURÉ POUR RÉACTEUR ÉLECTROCHIMIQUE**

(30) Priorité: 21.12.2020 FR 2013834
(71) Demandeur: Commissariat à l'Energie Atomique et aux Energies Alternatives, 75015 Paris (FR)
(72) Inventeur: JOUAN, Augustin, 38054 GRENOBLE Cedex 09 (FR); BLACHOT, Jean François, 38054 GRENOBLE Cedex 09 (FR); TREMBLAY, Denis, 38054 GRENOBLE Cedex 09 (FR)
(74) Mandataire: Bronchart, Quentin

(57) **Abrégé**

L'invention repose sur une utilisation novatrice de la technique d'impression par sérigraphie mesh pour réaliser des circuits fluidiques à canal structuré. En effet, grâce à l'utilisation de deux masques d'impression différents entre eux, il est possible de concevoir et réaliser très simplement et pour un coût supplémentaire très faible (un seul masque de sérigraphie supplémentaire) des circuits fluidiques à canal structuré. Toutes sortes de prototypes, notamment de plaque bipolaire, voire de réacteur électrochimique, sont ainsi aisément concevables et fabricables, notamment pour une caractérisation in situ de leurs propriétés respectives.

## Description

### DOMAINE TECHNIQUE

La présente invention concerne l'optimisation de la fabrication d'au moins un composant d'un réacteur électrochimique tel qu'une pile à combustible. Elle concerne plus particulièrement la réalisation de circuits fluidiques imprimés dans le cadre de la fabrication de cellules électrochimiques notamment destinées à une utilisation en pile à combustible, et en particulier à une utilisation en pile à combustible de température inférieure à 250°C.

### ETAT DE LA TECHNIQUE

Les piles à combustible sont par exemple envisagées comme système d'alimentation électrique pour des véhicules automobiles destinés à être produits à grande échelle dans le futur, ainsi que pour un grand nombre d'autres applications. Une pile à combustible est un dispositif électrochimique qui convertit de l'énergie chimique directement en énergie électrique. Un combustible tel que du dihydrogène ou du méthanol est utilisé comme carburant de la pile à combustible.

Les piles à combustible à membrane d'échange de protons, dites PEM, fonctionnent à basse température, typiquement inférieure à 250°C et présentent des propriétés de compacité particulièrement intéressantes.

### Principe de la pile à combustible

La pile à combustible est un générateur électrochimique qui permet de convertir de l'énergie chimique en énergie électrique par une réaction d'oxydo-réduction.

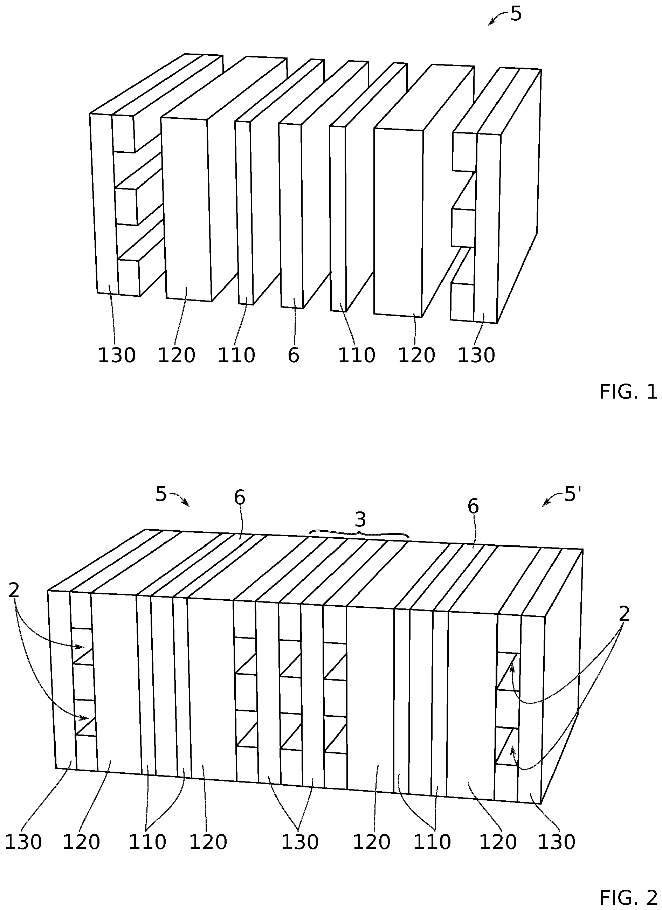

En référence à la figure 1 annexée, le cœur électrochimique 5 de la pile est constitué de deux électrodes 110 séparées par une membrane échangeuse d'ions 6. Les électrodes 110 sont alimentées d'un réactif approprié, respectivement un combustible pour l'anode et un comburant pour la cathode, créant ainsi une réaction électrochimique à la surface des électrodes 110 qui va permettre de générer le courant électrique.

En référence à la figure 2, la pile à combustible peut être constituée d'un empilement de cœurs électrochimiques 5, 5' montés en série appelé « stack ». Entre chaque empilement de cœurs électrochimiques 5, 5' peut être constituée une plaque bipolaire 3 pour permettre d'alimenter les électrodes 110 en réactifs. La pile à combustible peut donc être constituée d'un empilement de cellules unitaires séparées deux à deux par une plaque bipolaire 3.

Plus particulièrement, une pile à combustible à membrane échangeuse de protons ou PEMFC (de l'acronyme anglo-saxon « Proton Exchange Membrane Fuel Cell ») comprend au moins une cellule unitaire contenant un assemblage membrane-électrodes ou AME (110/6/110), constitué d'une membrane électrolytique 6 permettant le passage sélectif des protons et, de part et d'autre de cette membrane 6, les électrodes 110.

La membrane 6 est généralement constituée d'un ionomère perfluorosulfoné tel que le Nafion^{®}. Les électrodes 110, également appelées couches catalytiques ou actives, contiennent un catalyseur, avantageusement du platine (Pt), supporté par du carbone, et éventuellement un ionomère, en général le même que celui constituant la membrane 6.

Au niveau de l'anode, du dihydrogène (H2), utilisé comme carburant, est oxydé pour produire des protons traversant la membrane 6. Les électrons produits par cette réaction migrent vers le circuit fluidique, puis traversent un circuit électrique externe à la cellule 5 pour former un courant électrique. Au niveau de la cathode, de l'oxygène (O2) est réduit et réagit avec les protons ayant traversé la membrane 6 pour former de l'eau.

Des couches de diffusion gazeuse 120 ou GDL (de l'acronyme anglo-saxon « Gaz Diffusion Layer»), classiquement en fibres de graphite, peuvent être interposées entre les électrodes 110 et les plaques bipolaires 3.

### Principe d'une plaque bipolaire

La plaque bipolaire 3 assure plusieurs fonctions, parmi lesquelles notamment :
- la distribution des réactifs et l'évacuation des sous-produits formés, possiblement via des canaux 2 et/ou orifices ménagés en son sein;
- le transfert des électrons générés au niveau des anodes des différentes cellules unitaires 5, ce qui implique que la plaque bipolaire 3 soit électriquement conductrice ;
- le refroidissement des cellules unitaires 5, possiblement via la circulation d'un liquide de refroidissement en son sein ;
- un support mécanique pour le cœur électrochimique 5.

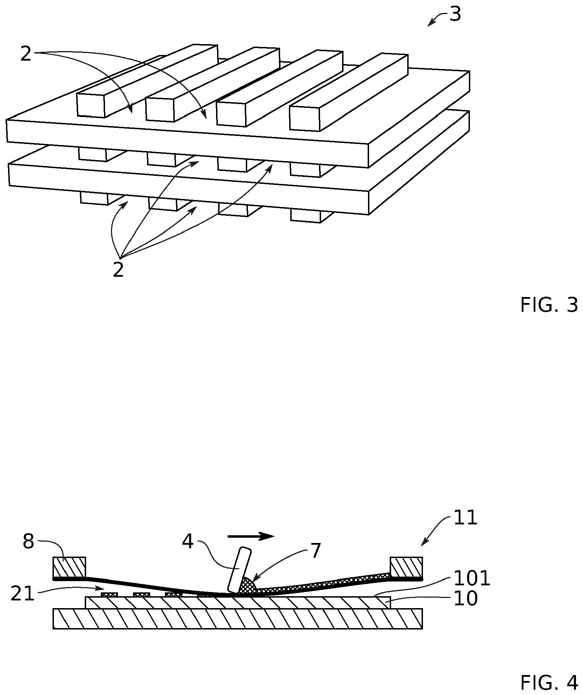

On peut considérer le cas typique d'une plaque bipolaire 3 telle qu'illustrée sur la figure 3 comprenant trois circuits fluidiques, dédiés respectivement au guidage des écoulements de fluide anodique, de fluide cathodique et de fluide de refroidissement (au centre de la plaque). Le guidage des écoulements est réalisé via la mise en place de nervures, comme des parois ou des plots, qui influent sur l'écoulement du fluide. Ces nervures peuvent prendre la forme, par exemple, d'un faisceau de canaux 2 parallèles, que l'on nomme ici « circuit fluidique ». Ces nervures réalisant la connexion électrique et thermique avec le cœur de pile, elles doivent être conducteurs électriques.

Chaque circuit fluidique d'une pile à combustible est généralement constitué d'un matériau conducteur de courant qui peut être du graphite, un plastique à renfort de fibres de carbone, ou bien un métal, tel que l'acier inoxydable, un alliage métallique ou tout autre matériau conducteur de courant. Les fluides cathodique et anodique sont distribués sur toute la surface active de chaque électrode par les canaux 2 des circuits fluidiques, chaque circuit fluidique comprenant une entrée pour permettre l'amenée du fluide et une sortie pour permettre l'évacuation du fluide non réactif et des sous-produits des réactions électrochimiques.

Les canaux 2 du circuit fluidique sont encore à ce jour principalement réalisés par usinage ou formage à partir d'une plaque électriquement conductrice 130. Dans le premier cas, la matière est enlevée et, dans le second cas, les canaux 2 sont créés par déformation de la plaque électriquement conductrice 130. Les canaux 2 de la plaque sont conçus pour contrôler la perte de charge des écoulements qui y circulent.

Plus particulièrement, chaque circuit fluidique utilisé dans la pile à combustible à membrane échangeuse de protons est principalement réalisé à partir de métal embouti pour des raisons de coûts, d'encombrement et de performances. Généralement, l'épaisseur de la plaque électriquement conductrice 130 est comprise entre 1 et 4 mm et les canaux 2 ont de préférence une largeur comprise entre 0,2 et 2 mm, une profondeur comprise entre 0,2 et 0,5 mm, et un espacement (ou largeur de dent) compris entre 0,2 et 2 mm. La surface de diffusion des fluides est variable en fonction de la dimension de la pile et de la puissance souhaitée. Pour les applications de forte puissance, un circuit de refroidissement des fluides est généralement inséré entre les canaux de diffusion de l'hydrogène à l'anode et les canaux de diffusion de l'oxygène (ou de l'air) à la cathode. L'empilement de circuits fluidiques sur deux niveaux, voire sur trois niveaux (comme représenté sur la figure 3), forme une plaque bipolaire 3.

Néanmoins, le circuit fluidique obtenu par emboutissage de tôle métallique présente certains inconvénients, parmi lesquels notamment :
- un procédé de réalisation compliqué et un coût de production qui reste encore élevé, en particulier pour de faibles volumes de production ;
- le bombé de la plaque 130 occasionnée par le formage qui rend compliqué le dépôt des joints pour garantir l'étanchéité de la cellule 5 ;
- la difficulté pour diminuer encore l'épaisseur de la plaque 130 et son poids, déjà très optimisés, qui impactent fortement la densité d'énergie volumique et massique de la pile à combustible ; et
- la difficulté pour diminuer la largeur des canaux 2 afin d'améliorer les performances de la pile, du fait des limites de formage des tôles utilisées.

Afin de simplifier le procédé de fabrication et diminuer le coût des plaques bipolaires, qui représente approximativement 40% du coût total de la pile à combustible, les solutions mises en oeuvre dans l'art antérieur ont notamment consisté à réaliser les nervures par impression sur un substrat plan métallique ou composite pour former un guide d'écoulement, puis la plaque bipolaire à partir d'au moins deux guides d'écoulement. Ce procédé permet, en variante, de réaliser le circuit fluidique sur la couche de diffusion gazeuse 120, en dehors de la plaque bipolaire 3.

D'autres agencements des circuits fluidiques, non détaillés ici, sont possibles. Par exemple, une plaque bipolaire 3 peut comprendre seulement deux circuits fluidiques, dédiés respectivement à chacun des deux réactifs. Par ailleurs, une plaque bipolaire 3 comprenant deux ou trois circuits fluidiques peut être constituée de plusieurs sous-ensembles disjoints, comprenant chacun au moins un circuit fluidique. Une plaque bipolaire 3 présentant les fonctions décrites précédemment est alors formée au moment de l'assemblage de la pile, lorsque les cellules sont empilées et qu'un effort de compression leur est appliqué.

### Réalisation de circuits fluidiques imprimés

En référence à la figure 4, l'impression de circuits fluidiques conducteurs se fait grâce à l'utilisation d'un masque de sérigraphie 11, 12 contenant l'image du circuit fluidique à imprimer. On fait passer une encre conductrice 7 à thixotropie très élevée à travers ce masque 11, 12 et l'impression permet de déposer des motifs 21, 22 de nervures, appelées aussi dents, sur la face 101 d'un substrat 10, de sorte à obtenir un circuit fluidique conducteur.

Plus particulièrement, la sérigraphie par écran maillé (désigné par mesh en langue anglaise) est basée sur l'utilisation d'un masque ou écran 11, 12 constitué de deux composants principaux : un maillage (« mesh ») et une émulsion. Le maillage, tendu à l'intérieur d'un cadre 8, est le support mécanique de l'écran 11, 12. Sa porosité est définie pour qu'il puisse être facilement traversé par l'encre. L'émulsion est un dépôt réalisé sur le maillage, et imprégnant le maillage à l'endroit de son dépôt, de manière à former une couche étanche à l'encre 7. Les vides présents dans cette couche d'émulsion sont destinés à être remplis par l'encre 7 au moment de la sérigraphie. L'épaisseur de la couche d'émulsion détermine en grande partie l'épaisseur de la couche d'encre déposée.

Des publications récentes montrent que les performances des réacteurs électrochimiques, et en particulier des piles à combustible, peuvent être améliorées grâce à l'intégration d'obstacles ponctuels dans le fond des canaux d'écoulement 2. Par exemple, la publication « Expérimental and numerical analysis of a three-dimensional flow field for PEMFCs » (Li, 2017) décrit les différents effets engendrés par l'utilisation de circuits fluidiques à canaux structurés (CFCS) dans une PEMFC. La publication regroupe à la fois une étude basée sur un modèle 3D et une expérimentation faite sur une cellule PEMFC de 7x7 cm². L'étude du modèle 3D permet de désigner la meilleure géométrie de canaux structurés pour ensuite utiliser ce design pour l'expérimentation et la comparaison de performances avec une cellule à canaux non structurés, dite « classique ». Les améliorations observées sont nombreuses : performances accrue, meilleure gestion de l'eau liquide, pourcentage de dioxygène consommé réduit et baisse des pertes de charges.

Mais la fabrication de tels circuits fluidiques en utilisant la technique de l'emboutissage, qui est la technique la plus répandue dans l'état de l'art, est très couteuse et donc inadaptée au prototypage de ces CFCS. En effet, la complexité des designs CFCS rend la fabrication des matrices nécessaires à l'emboutissage très couteuse et donc non-viable pour une application de prototypage et de R&D.

Toutefois, cette application de prototypage prendrait tout son sens, si on pouvait facilement réaliser les nombreuses configurations possibles pour un CFCS ; or, si, sur un circuit fluidique classique, les seuls paramètres modifiables sont la largeur et la hauteur des dents et des canaux, dans le cas d'un CFCS, chaque configuration va pouvoir en outre être modifiée relativement à chaque paramètre définissant les obstacles : leurs dimensions en largeur, en hauteur et en longueur relativement aux canaux d'écoulement qu'ils obstruent partiellement ; leurs formes qui peuvent être rectangulaires, à bosses, triangulaires, en gouttes, etc. ; leur nombre et leur distribution ; ainsi que leurs positions notamment par rapport aux canaux adjacents.

L'avantage de l'invention par rapport à cette publication repose notamment sur le fait que tous ces prototypes sont réalisables beaucoup plus rapidement et pour un coût très inférieur (dans la publication les prototypes sont usinés). Cet avantage étant naturellement d'autant plus important que les surfaces à structurer sont grandes.

Un objet de la présente invention est de proposer un procédé de fabrication de circuits fluidiques imprimés qui permette de pallier l'un au moins des inconvénients de l'art antérieur. Un objet de la présente invention est plus particulièrement de proposer un procédé de fabrication de circuits fluidiques imprimés qui permettent de réaliser toutes sortes de prototypes beaucoup plus rapidement et pour un coût très inférieur relativement aux prototypes usinés selon l'art antérieur, cette nouvelle capacité étant de préférence d'autant plus avantageuse que les surfaces à structurer sont grandes.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, un premier aspect de l'invention concerne un procédé de fabrication d'au moins un guide d'écoulement à canal structuré pour réacteur électrochimique, comprenant les étapes suivantes :
a. Fournir un substrat,
b. Fournir un premier écran maillé comprenant des ouvertures configurées pour former un premier motif d'éléments d'obstruction partielle d'au moins un canal d'écoulement d'un premier guide d'écoulement,
c. Fournir un deuxième écran maillé comprenant des ouvertures configurées pour former un deuxième motif de nervures, les nervures définissant ledit au moins un canal d'écoulement du premier guide d'écoulement,
le premier motif étant tel que, lorsque le deuxième écran maillé est superposé au premier écran maillé, les ouvertures du premier écran maillé positionnables de sorte que chacune d'entre elles se situe, simultanément aux autres, au droit d'une zone située entre deux ouvertures adjacentes entre elles du deuxième écran maillé ; puis
Sur une première face du substrat :
d. Imprimer une première couche d'une première encre par sérigraphie à l'aide du premier écran maillé,
e. Former le premier motif d'éléments d'obstruction partielle par séchage de la première couche, puis
f. Positionner le deuxième écran maillé de sorte qu'il repose, par une zone située entre deux ouvertures adjacentes entre elles du deuxième écran maillé, sur chacun des éléments d'obstruction partielle du premier motif formé, chaque ouverture du deuxième écran maillé étant positionnée au droit d'une zone de la première face du substrat qui est exempte d'éléments d'obstruction partielle, puis
g. Imprimer une deuxième couche d'une deuxième encre par sérigraphie à l'aide du deuxième écran maillé tel que précédemment positionné, ladite deuxième encre étant électriquement conductrice,
h. Former le deuxième motif de nervures par séchage de la deuxième couche, de sorte que les éléments d'obstruction partielle soient répartis le long dudit au moins un canal d'écoulement que définissent les nervures du deuxième motif. Ledit au moins un canal d'écoulement est ainsi structuré.

Ainsi, le procédé selon le premier aspect de l'invention permet de réaliser au moins un guide d'écoulement à canal structuré beaucoup plus rapidement et pour un coût très inférieur relativement aux guides d'écoulement à canal structuré usinés selon l'art antérieur. Toutes sortes de prototypes sont ainsi aisément concevables et fabricables, notamment pour une caractérisation in situ de leurs propriétés respectives avant un éventuel lancement d'une fabrication industrielle des guides d'écoulement à canal structuré présentant les propriétés recherchées en fonction des applications visées.

Un deuxième aspect de l'invention concerne un procédé de fabrication d'une plaque bipolaire pour réacteur électrochimique, et en particulier pour pile à combustible à membrane échangeuse de protons, comprenant :
- la fabrication, par un procédé de fabrication selon le premier aspect de l'invention, d'au moins deux guides d'écoulement à canal structuré sur au moins un substrat, de préférence de sorte à présenter un desdits au moins deux guides d'écoulement sur une première face dudit au moins un substrat et un desdits au moins deux guides d'écoulement sur une seconde face dudit au moins un substrat.

Selon un exemple du deuxième aspect de l'invention, le procédé comprend :
- la fabrication, par un procédé de fabrication selon le premier aspect de l'invention, d'au moins trois guides d'écoulement à canal structuré sur au moins deux substrat, et
- au moins un assemblage desdits au moins deux substrats entre eux de sorte que l'assemblage présente un desdits au moins trois guides d'écoulement entre deux desdits au moins deux substrats et deux autres desdits au moins trois guides d'écoulement de part et d'autre desdits au moins deux substrats.

Un troisième aspect de l'invention concerne un guide d'écoulement à canal structuré pour réacteur électrochimique comprenant au moins un canal d'écoulement supporté par une première face d'un substrat et délimité par des nervures constituées à base d'un premier matériau électriquement conducteur, le canal d'écoulement étant structuré par une pluralité d'éléments d'obstruction partielle répartis le long du canal d'écoulement et constitués à base d'un deuxième matériau, les premier et deuxième matériaux étant différents entre eux.

Le guide d'écoulement selon le troisième aspect de l'invention peut comprendre en outre au moins un deuxième canal d'écoulement supporté par une deuxième face du substrat et délimité par des nervures constituées à base d'un premier matériau électriquement conducteur, ledit au moins un deuxième canal d'écoulement étant structuré par une pluralité d'éléments d'obstruction partielle répartis le long du canal d'écoulement et constitués à base d'un deuxième matériau, les premier et deuxième matériaux étant différents entre eux.

Un quatrième aspect de l'invention concerne une plaque bipolaire pour réacteur électrochimique, et en particulier pour pile à combustible à membrane échangeuse de protons, comprenant au moins deux guides d'écoulement tel qu'introduits ci-dessus sur au moins un substrat de sorte à présenter un desdits au moins deux guides d'écoulement sur une première face dudit au moins un substrat et un desdits au moins deux guides d'écoulement sur une seconde face dudit au moins un substrat.

Selon un exemple du quatrième aspect de l'invention, la plaque bipolaire comprend :
- au moins trois guides d'écoulement dont au moins un guide d'écoulement à canal structuré tel qu'introduit ci-dessus et
- au moins deux substrats supportant chacun au moins un desdits au moins trois guides d'écoulement,
lesdits au moins deux substrats étant assemblés entre eux de sorte que l'assemblage présente un desdits au moins trois guides d'écoulement entre deux desdits au moins deux substrats et deux autres desdits au moins trois guides d'écoulement de part et d'autre desdits au moins deux substrats.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement une vue en perspective éclatée d'une partie d'un réacteur électrochimique selon un mode de réalisation de l'art antérieur.
La figure 2 représente schématiquement une vue en perspective regroupée d'un empilement de deux parties d'un réacteur électrochimique selon son mode de réalisation illustré sur la figure 1.
La figure 3 représente une vue en perspective d'une partie au moins d'une plaque bipolaire destinée à être située entre deux cœurs électrochimiques d'un réacteur électrochimique selon son mode de réalisation illustré sur la figure 1.
La figure 4 est une représentation schématique en coupe de côté d'une étape d'impression par sérigraphie pour la formation d'un motif d'impression.
La figure 5A représente schématiquement une vue de dessus du premier écran maillé mis en œuvre au cours du procédé de fabrication d'un guide d'écoulement selon le premier aspect de l'invention.
La figure 5B représente schématiquement une vue partielle en coupe, selon un plan comprenant l'axe A-A illustré sur la figure 5A, du premier écran maillé tel qu'illustré sur la figure 5A.
La figure 5C représente schématiquement une vue de dessus du deuxième écran maillé mis en œuvre au cours du procédé de fabrication d'un guide d'écoulement selon le premier aspect de l'invention.
Les figures 6 à 8 représentent schématiquement des vues partielles en coupe illustrant différentes étapes d'un mode de réalisation du procédé de fabrication d'un guide d'écoulement selon le premier aspect de l'invention, les figures 7 et 8 représentant une seule et même étape du procédé mais dans plans de coupe A-A et B-B (Cf. figure 9) différents entre eux.
La figure 9 est une vue en perspective schématique d'une partie d'un guide d'écoulement selon un mode de réalisation du troisième aspect de l'invention.
Les figures 10 à 12 illustrent chacune une vue en coupe schématique d'un exemple de configuration de deux guides d'écoulement selon le troisième aspect de l'invention.
Les figures 13 et 14 illustrent chacune une vue en coupe schématique d'un exemple de configuration d'une plaque bipolaire selon le quatrième aspect de l'invention.
La figure 15 illustre une vue en coupe schématique d'un exemple de configuration d'un guide d'écoulement selon un mode de réalisation du troisième aspect de l'invention.
La figure 16 illustre une association du guide d'écoulement de la figure 15 avec d'autres composants d'un réacteur électrochimique.
La figure 17 illustre une vue en coupe schématique d'un exemple de configuration d'un guide d'écoulement selon un mode de réalisation du troisième aspect de l'invention.
La figure 18 illustre une association du guide d'écoulement de la figure 17 avec un autre composant d'un réacteur électrochimique.
La figure 19A représente une photographie obtenue par microscopie d'une vue de dessus d'une partie d'un guide d'écoulement selon le troisième aspect de l'invention.
La figure 19B représente une photographie obtenue par microscopie d'une vue de dessus d'une partie de ce qu'obtiendrait un homme du métier s'il procédait, non pas en suivant le procédé selon le premier aspect de l'invention, mais de façon plus attendue.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs et les largeurs des différents éléments illustrés ne sont pas nécessairement représentatifs de la réalité ou de facteurs de forme réalistes.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple du premier aspect de l'invention, la première encre est d'une composition différente de celle de la deuxième encre, de sorte que les éléments d'obstruction partielle et les nervures sont de compositions différentes entre elles ;
Selon un exemple du premier aspect de l'invention, les premier et deuxième écrans maillés sont configurés de sorte que la première couche telle qu'imprimée ait une épaisseur au plus égale à trois quart, de préférence sensiblement inférieure à la moitié, d'une épaisseur de la deuxième couche telle qu'imprimée. De la sorte, les éléments d'obstruction partielle formés ont une épaisseur au plus égale à trois quart, de préférence sensiblement inférieure à la moitié, d'une épaisseur des nervures ;
Selon un exemple du premier aspect de l'invention, chaque écran maillé comprenant un maillage et une émulsion :
   - l'émulsion présente une épaisseur sensiblement comprise entre 100 et 200 µm, de préférence sensiblement comprise entre 100 et 150 µm, et encore plus préférentiellement sensiblement égale à 150 µm, et/ou
   - le maillage présente une épaisseur sensiblement comprise entre 50 et 150 µm, de préférence sensiblement comprise entre 80 et 120 µm, et encore plus préférentiellement sensiblement égale à 100 µm ;
Selon un autre exemple du premier aspect de l'invention, au moins une des ouvertures du premier écran maillé est d'une forme choisie parmi une forme rectangulaire, une forme triangulaire, une forme de goutte, et une forme ronde. De la sorte, l'élément d'obstruction partielle formé à travers cette ouverture présente une section transversale de même forme ;
Selon un autre exemple du premier aspect de l'invention, chaque écran maillé comprenant un maillage et une émulsion, le deuxième écran maillé est positionné sur le premier motif de sorte qu'il repose sur chacun des éléments d'obstruction partielle du premier motif par au moins une partie de son émulsion ;
Selon un autre exemple du premier aspect de l'invention, au moins l'impression de la deuxième couche d'encre électriquement conductrice, de préférence l'impression de chaque couche d'encre, est réalisée en appliquant une contrainte de cisaillement sur cette couche, la viscosité de l'encre imprimée étant comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹. Une encre conductrice présentant ces caractéristiques est dite à thixotropie très élevée ;
Selon un autre exemple du premier aspect de l'invention, le substrat fourni comprend au moins l'un parmi une couche de diffusion gazeuse du réacteur électrochimique, une couche d'électrode du réacteur électrochimique et une plaque électriquement conductrice ;
Selon un autre exemple du premier aspect de l'invention, le substrat fourni étant une plaque électriquement conductrice, les étapes a à h du procédé sont répétées sur la deuxième face du substrat pour y fabriquer un second guide d'écoulement.

De préférence, chaque face à imprimer du substrat fourni est exempte de relief.

On entend par un paramètre « sensiblement égal/supérieur/inférieur à » une valeur donnée que ce paramètre est égal/supérieur/inférieur à la valeur donnée, à plus ou moins 20%, voire 10%, près de cette valeur. On entend par un paramètre « sensiblement compris entre » deux valeurs données que ce paramètre est au minimum égal à la plus petite valeur donnée, à plus ou moins 20 %, voire 10 %, près de cette valeur, et au maximum égal à la plus grande valeur donnée, à plus ou moins 20 %, voire 10 %, près de cette valeur.

L'invention repose sur une utilisation novatrice de la technique d'impression par sérigraphie mesh pour réaliser des circuits fluidiques à canaux structurés (ou CFCS).

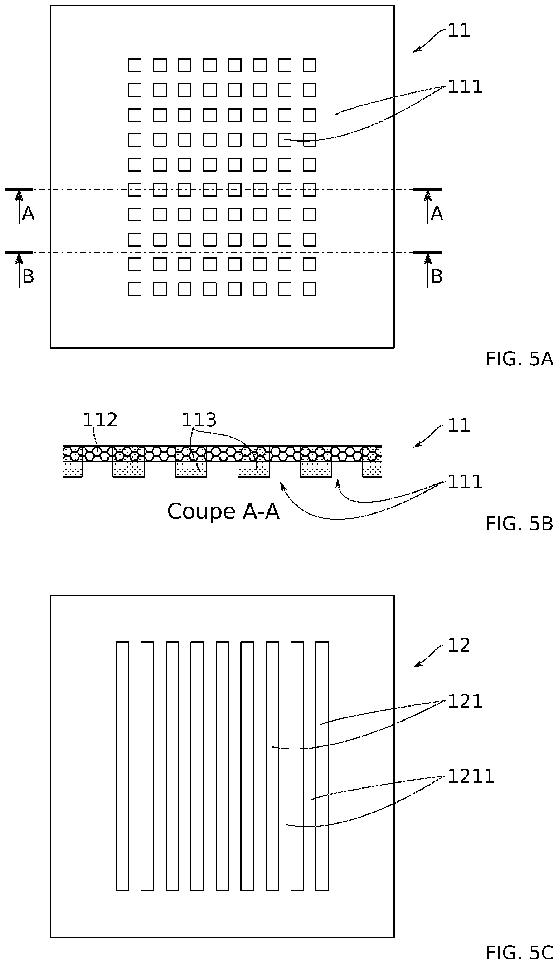

En référence aux figures 4 et 5A à 5C, le procédé selon le premier aspect de l'invention comprend tout d'abord les étapes suivantes :
- Fournir un substrat 10,
- Fournir un premier écran maillé 11 comprenant des ouvertures 111 configurées pour former un premier motif 21 d'éléments d'obstruction partielle 211 d'au moins un canal d'écoulement d'un premier guide d'écoulement 1, et
- Fournir un deuxième écran maillé 12 comprenant des ouvertures 121 configurées pour former un deuxième motif 22 de nervures 221, les nervures 221 définissant ledit au moins un canal d'écoulement du premier guide d'écoulement 1.

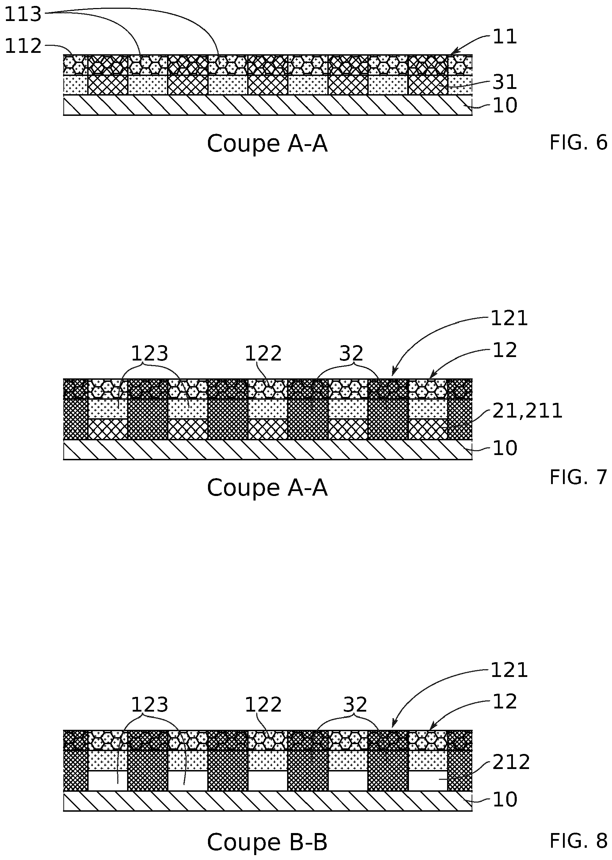

Comme illustré sur les figures 6 à 8, chaque écran maillé 11, 12 comprend un maillage 112, 122 et une émulsion 113, 123. Typiquement, chaque émulsion 113, 123 présente une épaisseur sensiblement comprise entre 100 et 200 µm, de préférence sensiblement comprise entre 150 et 200 µm, et encore plus préférentiellement sensiblement égale à 150 µm. En alternative ou en complément, chaque maillage 112, 122 présente une épaisseur sensiblement comprise entre 50 et 150 µm, de préférence sensiblement comprise entre 80 et 120 µm, et encore plus préférentiellement sensiblement égale à 100 µm. Ainsi, la mise en œuvre de l'invention ne requiert avantageusement pas nécessairement l'utilisation d'écrans maillés comprenant une épaisseur d'émulsion sensiblement égale à 200 µm, qui reste à ce jour l'épaisseur d'émulsion maximale déposable par les constructeurs de masques de sérigraphie mesh. L'invention n'est toutefois pas limitée aux valeurs susmentionnées d'épaisseur d'émulsion et/ou de maillage. En outre, d'autres paramètres, tels que la taille de maille ou porosité de chaque maillage, peuvent être à considérer.

Sur la figure 5B, on observe que les ouvertures 111 du premier écran maillé 11 correspondent à des zones du premier écran maillé 11 qui ne sont pas recouvertes de l'émulsion 113. Au niveau de ses ouvertures 111, on observe également que le maillage 112 du premier écran maillé 11 n'est pas imbibée d'émulsion 113. L'encre à imprimer via cet écran 11 va donc pouvoir passer à travers le maillage 112 et remplir les espaces laissés vides par l'émulsion 113.

Le deuxième écran maillé 12 présente une structure correspondante. Toutefois, les ouvertures 121 du deuxième écran maillé 12 n'ont pas la même forme que les ouvertures 111 du premier écran maillé 11. Plus particulièrement, le premier motif 21 que forment les ouvertures 111 du premier écran maillé 11 est tel que, lorsque le deuxième écran maillé 12 est superposé au premier écran maillé 11, les ouvertures 111 du premier écran maillé 11 sont positionnables de sorte que chacune d'entre elles se situe, simultanément aux autres, au droit d'une zone 1211 (Cf. figure 5C) située entre deux ouvertures 121 adjacentes entre elles du deuxième écran maillé 12.

Autrement dit, si l'on découpe les figures 5A et 5C, qu'on les superpose l'une à l'autre (en conservant leur orientation relative) et que l'on observe par transparence la superposition obtenue, on s'aperçoit que les écrans 11 et 12 peuvent être positionnés de sorte qu'aucune des ouvertures 121 du deuxième écran maillé 12 ne s'étende, même partiellement, au droit d'une quelconque ouverture 111 du premier écran maillé 11 et de sorte que chaque ouverture 111 du premier écran maillé 11 soit située entre deux ouvertures 121 du deuxième écran maillé 12. Dans l'exemple illustré sur les figures 5A et 5C, seuls deux bords opposés de chaque ouverture 111 du premier écran maillé 11 coïncideraient chacun avec un bord d'une des deux ouvertures 121 du deuxième écran maillé 12 qui définissent la zone 1211 au droit de laquelle se situe ladite ouverture 111. Dans cette configuration, et comme cela apparaîtra encore plus clairement par la suite, les ouvertures 111 du premier écran maillé 11 et les ouvertures 121 du deuxième écran maillé 12 sont configurées de sorte que chaque élément d'obstruction partielle 211 s'étende sur toute la largeur du canal d'écoulement 2. Il apparaîtra également plus clairement par la suite que l'invention n'est toutefois pas limitée à une telle configuration. En particulier, les ouvertures 111 du premier écran maillé 11 et les ouvertures 121 du deuxième écran maillé 12 peuvent être configurées de sorte que chaque élément d'obstruction partielle 211 s'étende sur une partie seulement de la largeur du canal d'écoulement 2, voire sur une partie centrale seulement de la largeur du canal d'écoulement 2.

On remarque également que le premier écran maillé 11 tel qu'illustré sur la figure 5A présente huit colonnes d'ouvertures 111 et que le deuxième écran maillé 12 tel qu'illustré sur la figure 5B présente huit zones 1211 pour dix ouvertures 121. Chaque colonne d'ouvertures 111 peut être superposée à chaque zone 1211 entre deux ouvertures adjacentes 121, les ouvertures 111 d'une même colonne étant réparties sur une unique zone 1211.

Il est à noter ici que les ouvertures 111 du premier écran maillé 11 ne sont pas limitées à une forme rectangulaire telle qu'illustrée sur la figure 5A. Les ouvertures 111 du premier écran maillé 11 peuvent prendre n'importe quelle autre forme compatible avec la technique d'impression par sérigraphie mesh, et notamment une forme triangulaire, une forme de goutte et une forme ronde. De même, les ouvertures 111 du premier écran maillé 11 n'ont pas nécessairement toutes la même forme. Ainsi, si chaque élément d'obstruction partielle 211 formé à travers une ouverture 111 tel qu'illustrée sur la figure 5A présentera une section transversale de forme rectangulaire, des éléments d'obstruction partielle 211 présentant une section transversale prenant d'autres formes peuvent également être formés.

Il est à noter en outre que les ouvertures 121 du deuxième écran maillé 12, de même que les nervures 221 du deuxième motif 22, ne sont limitées ni à une forme droite, ni à une répartition parallèle.

Plus particulièrement, on distingue principalement trois modes de circulation des réactifs ou d'un liquide de refroidissement dans les canaux d'écoulement 2 :
- les canaux en serpentin : un ou plusieurs canaux parcourent l'ensemble de la zone active en plusieurs allers-retours ;
- les canaux parallèles : un faisceau de canaux parallèles et traversants parcourt la zone active de part en part ; et
- les canaux interdigités : un faisceau de canaux parallèles et bouchés parcourt la zone active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Le procédé de fabrication selon le premier aspect de l'invention est adapté à la fabrication d'un guide d'écoulement 1 au moins selon n'importe lequel des trois modes de circulation énoncés ci-dessus.

En référence aux figures 6 à 9, le procédé de fabrication selon le premier aspect de l'invention comprend en outre les étapes suivantes, réalisées sur une première face 101 du substrat 10 :
- Imprimer une première couche 31 d'une première encre par sérigraphie à l'aide du premier écran maillé 11, par exemple de la façon illustrée sur la figure 6,
- Former le premier motif 21 d'éléments d'obstruction partielle 211 par séchage de la première couche 31,
- Positionner le deuxième écran maillé 12 de sorte qu'il repose sur chacun des éléments d'obstruction partielle 211 du premier motif 21 formé, chaque ouverture 121 du deuxième écran maillé 12 étant positionnée, de la façon illustrée sur la figure 7, au droit d'une zone de la première face 101 du substrat 10 qui est exempte d'éléments d'obstruction partielle 211, puis
- Imprimer une deuxième couche 32 d'une deuxième encre par sérigraphie à l'aide du deuxième écran maillé 12 tel que précédemment positionné, et
- Former le deuxième motif 22 de nervures 221 par séchage de la deuxième couche 32.

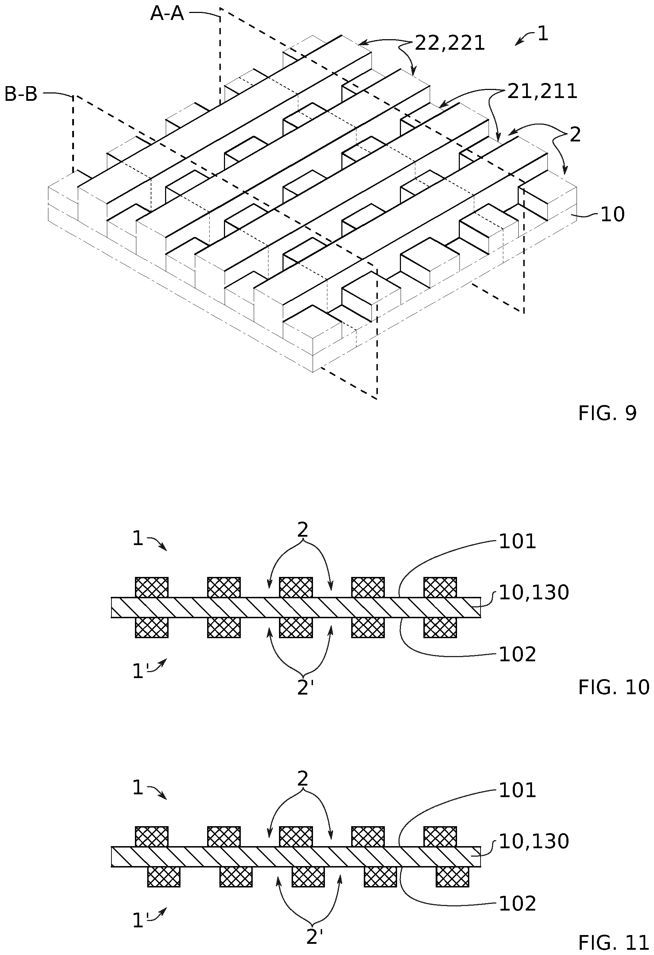

De la sorte, les éléments d'obstruction partielle 211 sont répartis le long dudit au moins un canal d'écoulement 2 que définissent les nervures 221 du deuxième motif 22. Le canal d'écoulement 2 est ainsi structuré de la façon illustrée sur la figure 9. Si cette dernière figure illustre schématiquement le guide d'écoulement 1 qui serait obtenu par mise en œuvre du procédé selon le premier aspect de l'invention tel que ce procédé est illustré sur les figures 5A à 5C et 6 à 8, la figure 19A illustre quant à elle une photographie en vue de dessus d'un guide d'écoulement 1 fabriqué par mise en œuvre d'une proche variante dudit procédé. On observe, sur cette photographie, que les canaux d'écoulement 2, ainsi que les éléments d'obstruction partielle 211 desdits canaux, sont suffisamment bien définis pour être assuré qu'ils remplissent leur fonction, notamment lorsque le guide d'écoulement 1 sera assemblé à d'autres composants pour former un réacteur électrochimique.

Ainsi, grâce à l'utilisation de deux masques d'impression ou écrans maillés 11 et 12 différents entre eux permettant d'imprimer indépendamment les éléments d'obstruction partielle 211 et les nervures 221 d'un canal d'écoulement 2, le procédé de fabrication selon le premier aspect de l'invention rend possible très simplement et pour un coût supplémentaire très faible (un seul masque de sérigraphie supplémentaire) la structuration de circuits fluidiques en imprimant d'abord les éléments d'obstruction partielle 211, puis les nervures 221.

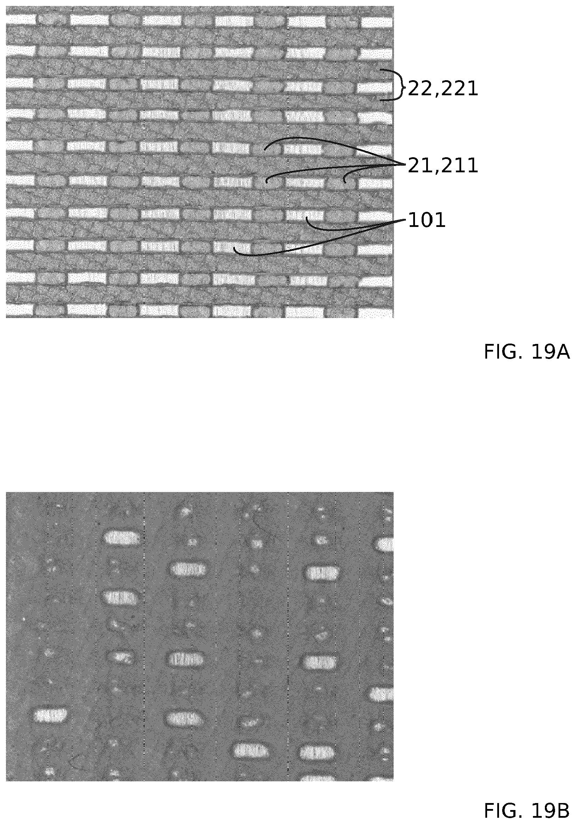

Notons qu'un tel enchaînement d'étapes d'impression par sérigraphie n'est pas nécessairement intuitif. En effet, l'homme du métier serait au contraire tenté de réaliser un guide d'écoulement à canal structuré en utilisant un premier masque d'impression par sérigraphie « mesh » configuré pour imprimer, dans une première étape, donc avec une même encre, à la fois la base des nervures 221 et les éléments d'obstruction partielle 211, puis en utilisant un second masque d'impression par sérigraphie configuré pour imprimer, dans une deuxième étape, le haut des nervures 221 sur leur base. Néanmoins, le rapport de la surface ouverte sur la surface totale du premier masque d'impression est alors trop important et les motifs imprimés en utilisant ce premier masque d'impression sont mal définis ; l'encre débordant sur les zones à ne pas imprimer, l'homme du métier parviendrait, en s'y prenant ainsi, à une configuration dysfonctionnelle telle qu'illustrée par la photographie de la figure 19B.

Notons que la deuxième encre, c'est-à-dire celle qui permet de former les nervures 221 du deuxième motif 22, est de préférence électriquement conductrice, de sorte que le guide d'écoulement 1 fabriqué par mise en œuvre du procédé de fabrication selon le premier aspect de l'invention remplisse son rôle de conducteur électrique, notamment en vue d'une application PEM.

Notons que, comme illustré sur la figure 7, le deuxième écran maillé 12 repose plus particulièrement sur chacun des éléments d'obstruction partielle 211 du premier motif 21 par au moins une partie de son émulsion 123. Dès lors, il apparaît que le deuxième écran maillé 12 tel que positionné, afin de procéder à la deuxième étape d'impression, est situé à une hauteur non nulle relativement au substrat 10, et plus particulièrement à une hauteur qui est égale à l'épaisseur des éléments d'obstruction partielle 211. La hauteur des nervures 221 obtenues sera donc supérieure à l'épaisseur d'émulsion 123 du deuxième écran maillé 12. Il n'est donc pas indispensable de prévoir une épaisseur d'émulsion 123 du deuxième écran maillé 12 qui soit sensiblement égale à 200 µm, qui reste à ce jour l'épaisseur d'émulsion maximale déposable par les constructeurs de masques de sérigraphie mesh, notamment pour effectivement obtenir des nervures 221 d'une hauteur sensiblement égales à 200 µm.

Il apparaît donc que, avantageusement, le procédé de fabrication selon le premier aspect de l'invention permet de former des nervures 221 ayant une épaisseur supérieure à celle des éléments d'obstruction partielle 211, alors que les premier et deuxième écrans maillés 11 et 12 ne présentent pas nécessairement des couches d'émulsion 113 et 123 d'épaisseurs différentes entre elles. L'on comprend aussi qu'il est tout à fait aisé de maîtriser la différence entre la hauteur des éléments d'obstruction partielle 211 et la hauteur des nervures 221. En effet, les premier et deuxième écrans maillés 11 et 12 peuvent aisément être configurés de sorte que la première couche 31 telle qu'imprimée ait une épaisseur au plus égale à trois quart, de préférence sensiblement inférieure à la moitié, d'une épaisseur de la deuxième couche 32 telle qu'imprimée ; de la sorte, les éléments d'obstruction partielle 211 formés présente une épaisseur au plus égale à trois quart, de préférence sensiblement inférieure à la moitié, de l'épaisseur des nervures 221.

La figure 8 est une vue en coupe selon le plan de coupe A-A illustré sur la figure 9, c'est-à-dire un plan de coupe distant des éléments d'obstruction partielle 211. On y observe que le deuxième écran maillé 12, lorsqu'il est positionné afin de réaliser l'impression de la deuxième couche 32, peut définir des espaces vides 212 entre la face 101 du substrat 10 et certaines parties de son émulsion 123, et en particulier les parties de son émulsion qui ne reposent pas sur les éléments d'obstruction partielle 211. Cette possibilité est notamment autorisée par l'usage d'une encre d'impression de la deuxième couche 32 pouvant être qualifiée d'encre à thixotropie très élevée. En effet, une telle encre n'aura pas tendance à baver dans les espaces vides 212 lors de l'impression de la deuxième couche 32. Cette possibilité permet de relâcher les contraintes de fabrication du deuxième écran maillé 12 en évitant notamment d'avoir à structurer la couche d'émulsion 123, en particulier de sorte que cette couche occuperait les espaces vides 212. Une telle contrainte pourrait en outre limiter la hauteur d'impression des nervures 221, au vu des limites actuelles des fabricants de masques de sérigraphie.

Sur la figure 7, l'usage de textures différentes entre elles pour illustrer chaque encre utilisée montre que chaque étape d'impression peut être réalisée avec une encre qui lui est propre. Ainsi, les éléments d'obstruction partielle 211 peuvent être constitués à partir d'une encre différente de celle à partir de laquelle les nervures 221 sont elles-mêmes constituées. Il est ainsi possible de jouer sur la(les) constitution(s) des encres imprimée(s), par exemple pour faire varier leur qualité de conducteur électrique, leur qualité de tenue mécanique, ou le coût de fabrication associé à la mise en œuvre du procédé selon les différentes variantes du premier aspect de l'invention.

L'invention offre ainsi une possibilité de variation avantageuse en termes d'encres à imprimer. Toutefois, il est préférable que chacune de ces encres puisse être qualifiée d'encre à thixotropie très élevée. Plus particulièrement, une telle encre peut être caractérisée par le fait que son impression par sérigraphie puisse effectivement être réalisée en lui appliquant, de la façon illustrée sur la figure 4, une contrainte de cisaillement, l'encre présentant :
- une viscosité sensiblement comprise entre 70 et 500 Pa.s lorsqu'une vitesse de cisaillement sensiblement égale à 0,1 s⁻¹ lui est appliquée, et
- une viscosité sensiblement comprise entre 2,5 et 7 Pa.s lorsqu'une vitesse de cisaillement sensiblement égale à 100 s⁻¹ lui est appliquée.

Notons ici que, si l'encre à imprimer pour former les nervures 221 se doit d'être électriquement conductrice, notamment en vue d'une application PEM du guide d'écoulement 1 fabriqué selon le premier aspect de l'invention, il est en revanche possible que l'encre à imprimer pour former les éléments d'obstruction partielle 211 ne soit pas électriquement conductrice. Au contraire, on pourra choisir, pour imprimer les éléments d'obstruction partielle 211, une encre non conductrice électriquement, mais présentant par exemple des propriétés mécaniques ou chimiques plus avantageuses.

Un autre paramètre relatif au guide d'écoulement 1 fabriqué par mise en œuvre du procédé selon le premier aspect de l'invention concerne la largeur des canaux d'écoulement 2. Cette dernière est définie, selon les modes de réalisation décrits ci-dessus, par le premier écran maillé 11. En effet, l'émulsion 123 du deuxième écran maillé 12 présente un motif qui est le négatif du deuxième motif 21 des nervures 221 et qui définit, entre ces dernières, la largeur des canaux d'écoulement 2 du guide 1. Autrement dit, la largeur des zones 1211 entre deux ouvertures 121 du premier écran maillé 11 définit la largeur du canal d'écoulement 121 entre ces deux ouvertures.

Il est en outre possible de répéter le procédé de fabrication selon le premier aspect de l'invention sur la seconde face 102 du substrat 10, de sorte à fabriquer sur cette face 102 un second guide d'écoulement 1', par exemple d'une des façons illustrées sur les figures 10 à 12. Notons ici que ces exemples de réalisation sont plus particulièrement adaptés à un substrat 10 comprenant, ou étant constitué de, une simple plaque électriquement conductrice 130, par opposition à une couche d'électrode 110 et une couche de diffusion gazeuse 120 pour réacteur électrochimique. Notons également que chacune des vues en coupe illustrées sur ces figures a été prise selon un plan de coupe distant des éléments d'obstruction partielle 211, par exemple selon le plan de coupe B-B illustré sur la figure 9.

Une telle plaque électriquement conductrice 130 peut par exemple être constituée à base d'un métal par exemple choisi parmi l'acier inoxydable, l'aluminium, ou le titane. Le métal peut par exemple être protégé par un dépôt carboné ou métallisé ou un polymère composite conducteur d'électrons incluant une couche de métallisation, pour protéger la plaque 130 contre la corrosion ou pour diminuer les résistances de contact. La plaque 130 peut être plus ou moins rigide. Elle a de préférence une épaisseur comprise entre 0,01 et 1 mm, plus favorablement comprise entre 0,02 et 0,1mm.

Dans l'exemple illustré par la figure 10, un premier guide d'écoulement 1 a été fabriqué par mise en œuvre du procédé selon le premier aspect de l'invention sur une face supérieure 101 de la plaque électriquement conductrice 130 et un seconde guide d'écoulement 1' a été fabriqué sur une face inférieure 102 de la plaque 130. Des canaux d'écoulement sont ainsi ménagés de part et d'autre de la plaque 130 entre les nervures. Dans cet exemple, les nervures des deux faces opposées s'étendent de façon parallèle, présentent de mêmes dimensions et sont situées en vis-à-vis : les nervures des deux faces sont le symétrique les unes des autres par rapport à la plaque 130.

Dans l'exemple illustré par la figure 11, les nervures des deux faces opposées s'étendent de façon parallèle et présentent de mêmes dimensions, mais sont décalées selon une direction transversale à leur direction principale d'extension.

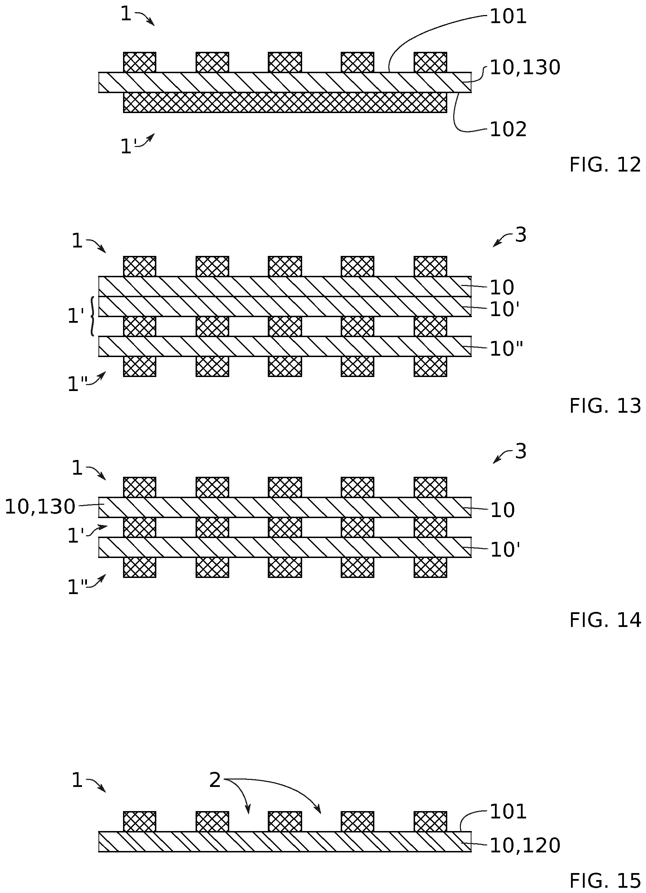

Dans l'exemple de la figure 12, les nervures des deux faces opposées s'étendent selon des directions perpendiculaires.

Ces exemples ont vocation à montrer que toute variation entre premier guide d'écoulement 1 fabriqué sur la première face 101 du substrat 10 et second guide d'écoulement 1' fabriqué sur la deuxième face 102 du substrat 10 est envisageable, la fabrication d'un des guides d'écoulement 1 et 1' selon l'une quelconque des variantes du premier aspect de l'invention ne contraignant pas la fabrication de l'autre selon l'une quelconque des variantes du premier aspect de l'invention. Par exemple, chacun des premier et second guides d'écoulement 1 et 1' fabriqués de part et d'autre d'une même plaque 130 peut être d'un mode quelconque parmi les trois modes de circulation décrits plus haut.

Un paramètre caractérisant les éléments d'obstruction partielle 211 n'a encore pas été discuté ci-dessus. Il s'agit de la longueur de ses éléments 211, ou plus généralement de leur dimension selon la direction d'extension principale du canal d'écoulement 2 qu'ils permettent d'obstruer partiellement. Ce paramètre n'a pas d'autres limites que celles liées à la longueur du canal d'écoulement 2 lui-même et à celles liées à la pertinence de la fonctionnalisation du canal d'écoulement 2 via sa structuration par les éléments d'obstruction partielle 211, si ce n'est peut-être celles liées au rapport de la surface ouverte sur la surface totale du premier écran maillé 11 qui ne doit pas être si important que des phénomènes de bavures tels qu'illustrés sur la photographie de la figure 19B seraient observés.

Un exemple de mise en œuvre du procédé selon le premier aspect de l'invention permet la fabrication d'un circuit fluidique conducteur ayant :
- Une largeur de dent 221 de 400 µm,
- Une largeur de canal 2 de 400 µm,
- Une hauteur de dent 221 de 200 µm,
- des obstacles 211 de formes rectangulaires,
- une hauteur d'obstacles 211 de 100 µm,
- une longueur d'obstacles 211 de 800 µm.

À cette fin, le premier écran maillé 11 peut présenter une épaisseur d'émulsion 113 de 150 µm, une largeur d'ouverture 111 de 400 µm et longueur d'ouverture 111 de 800 µm. Le deuxième écran maillé 12 peut présenter une épaisseur d'émulsion 123 de 150 µm, une largeur d'ouverture 121 de 400 µm et une distance entre ouvertures 121 adjacentes entre elles de 400 µm.

La première étape d'impression permet de former des obstacles 211 de 400 µm de large et de 800 µm de long pour 100 µm de haut. La deuxième étape d'impression permet de former des dents 221 de 400 µm de large pour 200 µm de haut.

Un quatrième aspect de l'invention concerne une plaque bipolaire, notamment destinée à une application PEM. Cette plaque bipolaire peut être fabriquée par mise en œuvre d'un procédé de fabrication d'une plaque bipolaire selon le deuxième aspect de l'invention. Ce procédé comprend tout d'abord la mise en œuvre d'une des variantes décrites plus haut du procédé de fabrication selon le premier aspect l'invention. Il consiste ensuite à assembler entre eux une pluralité de guides d'écoulement 1 et 1' ainsi fabriqués. Deux exemples de telles plaques bipolaires 3 sont illustrés sur chacune des figures 13 et 14.

La figure 13 illustre une plaque bipolaire 3, formée par la superposition de guides d'écoulement 1, 1' et 1 " obtenus par mise en œuvre d'une des variantes décrites plus haut du procédé de fabrication selon le premier aspect l'invention. Dans cet exemple, trois guides d'écoulement 1, 1' et 1 " sont fabriqués à partir de trois substrats 10, 10' et 10". Ces trois guides d'écoulement comportent des nervures sur une unique face. Le guide 1 supérieur présente des nervures en saillie depuis la face supérieure du substrat 10. Le guide intermédiaire 1' et le guide inférieur 1" présentent des nervures 31 en saillie depuis les faces inférieures des substrats 10' et 10" respectivement. Lorsque ces trois guides 1, 1', et 1" sont superposées, des canaux d'écoulement d'un réactif sont ménagés entre les nervures du guide supérieur 1, des canaux d'écoulement d'un liquide caloporteur sont ménagés entre les nervures du guidage intermédiaire 1', et des canaux d'écoulement d'un autre réactif sont ménagés entre les nervures du guide inférieur 1".

La figure 14 illustre une plaque bipolaire 3, formée par la superposition de guides d'écoulement 1, 1' et 1" fabriqués à partir de deux substrats 10 et 10' par mise en œuvre d'une des variantes décrites plus haut du procédé de fabrication selon le premier aspect l'invention. Dans cet exemple, trois guides d'écoulement 1, 1' et 1" sont superposés. Le guide supérieur 1 et le guide intermédiaire 1' partage un même substrat 10 et forment une configuration telle qu'illustrée à la figure 10 dans laquelle le substrat 10 est une simple plaque électriquement conductrice 130. Cette plaque 130 comporte donc des nervures en saillie depuis ses deux faces. Le guide inférieur 1" présente des nervures en saillie depuis la face inférieure du substrat 10'. Comme sur la figure 13, lorsque les trois guides 1, 1' et 1 " sont superposées, des canaux d'écoulement d'un réactif sont ménagés entre les nervures du guide supérieur 1, des canaux d'écoulement d'un liquide caloporteur sont ménagés entre les nervures du guide intermédiaire 1', et des canaux d'écoulement d'un autre réactif sont ménagés entre les nervures du guide inférieur 1".

La figure 15 est une vue en coupe schématique d'un guide d'écoulement 1 selon un autre mode de réalisation de l'invention. Le substrat 10 sur lequel les couches d'encre 31 et 32 ont été imprimées par sérigraphie est ici une couche de diffusion gazeuse 120. L'encre peut être imprimée sur une face 101 de la couche de diffusion gazeuse 120, avec des paramètres d'impression similaires à ceux décrits plus haut. L'on obtient, sur la couche de diffusion gazeuse 120, un guide d'écoulement 1 par mise en œuvre d'une des variantes décrites plus haut du procédé de fabrication selon le premier aspect l'invention.

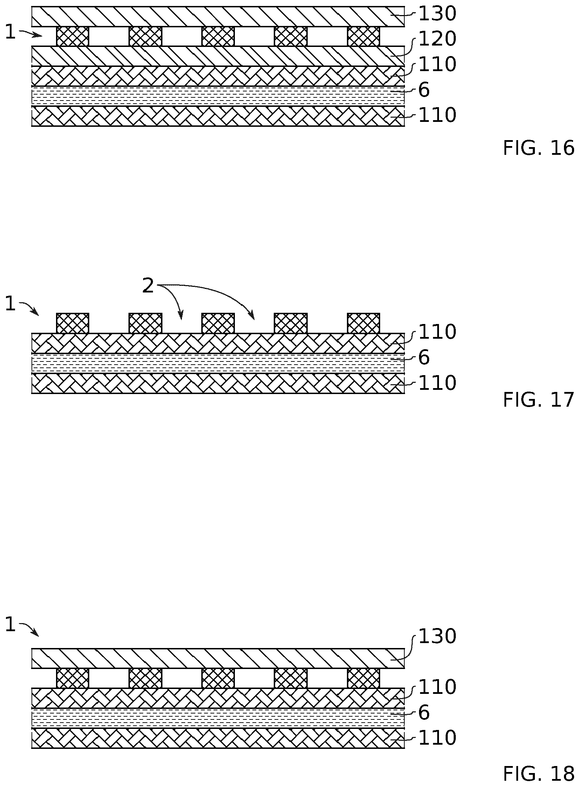

La figure 16 est une vue en coupe schématique d'un guide d'écoulement 1 obtenu par mise en œuvre d'une des variantes décrites plus haut du procédé de fabrication selon le premier aspect l'invention, associé à d'autres composants d'un réacteur électrochimique. Une plaque électriquement conductrice 130, telle que celle détaillée dans les modes de réalisation décrits en référence aux figures 10 à 12, peut être plaquée contre le sommet des nervures d'un guide d'écoulement 1. Un assemblage membrane-électrodes, incluant une membrane 6 et deux électrodes 110, est plaqué contre une face inférieure d'une couche de diffusion gazeuse 120 supportant les nervures du guide d'écoulement.

La figure 17 est une vue en coupe schématique d'un guide d'écoulement 1 obtenu par mise en œuvre d'une des variantes décrites plus haut du procédé de fabrication selon le premier aspect l'invention, associé à d'autres composants d'un réacteur électrochimique. Le substrat 10 sur lequel les deux couches d'encre 31 et 32 ont été imprimées par sérigraphie est ici une électrode 110 solidarisée, préalablement ou postérieurement à l'impression, à une membrane échangeuse de protons 6 d'un assemblage membrane-électrodes. L'encre peut être imprimée sur une face de l'électrode 110, avec des paramètres d'impression similaires à ceux décrits plus haut.

La figure 18 est une vue en coupe schématique de l'assemblage illustré sur la figure 17, associé à un autre composant d'un réacteur électrochimique, à savoir une plaque électriquement conductrice 130. Cette dernière, qui peut être telle que dans les modes de réalisation décrits en référence aux figures 10 à 12, peut être plaquée contre le sommet des nervures s'étendant depuis la surface d'une des électrodes 110.

L'invention n'est pas limitée aux modes de réalisation précédemment décrits.

Par exemple, chaque couche 31 et 32 d'encre peut être imprimée plusieurs fois, formant alors chacune un multicouche. Ceci peut permettre d'augmenter la densité des dépôts et/ou leur hauteur. Dans ce cas, la phase de séchage est répétée autant de fois que chaque multicouche comprend de couches.

Notons ici que les phases de séchage peuvent par exemple être réalisées en étuve à une température sensiblement égale à 80°C pendant un temps sensiblement égal à 10 minutes.

La présente invention peut être appliquée à tout type de réacteurs électrochimiques nécessitant au moins un circuit fluidique, notamment pour l'amenée des réactifs et l'évacuation des produits de la réaction et/ou la circulation d'un fluide de refroidissement. Parmi ces réacteurs électrochimiques, l'on compte non seulement des piles à combustible, comme déjà mentionné plus haut, mais également, à titre d'exemple additionnel, des électrolyseurs.

Notons enfin que la présente invention permet la fabrication de circuit fluidique présentant des canaux d'écoulement fins, c'est-à-dire de largeur inférieure à 400 µm, qui ne sont pas réalisables en séries par emboutissage.

## Revendications

1. Procédé de fabrication d'au moins un guide d'écoulement (1, 1') à canal structuré pour réacteur électrochimique, comprenant les étapes suivantes :
a. Fournir un substrat (10),
b. Fournir un premier écran maillé (11) comprenant des ouvertures (111) configurées pour former un premier motif (21) d'éléments d'obstruction partielle (211) d'au moins un canal d'écoulement d'un premier guide d'écoulement (1),
c. Fournir un deuxième écran maillé (12) comprenant des ouvertures (121) configurées pour former un deuxième motif (22) de nervures (221), les nervures (221) définissant ledit au moins un canal d'écoulement du premier guide d'écoulement (1), ² le premier motif (21) étant tel que, lorsque le deuxième écran maillé (12) est superposé au premier écran maillé (11), les ouvertures (111) du premier écran maillé (11) sont positionnables de sorte que chacune d'entre elles se situe, simultanément aux autres, au droit d'une zone (1211) située entre deux ouvertures (121) adjacentes entre elles du deuxième écran maillé (12); puis
Sur une première face (101) du substrat (10) :
d. Imprimer une première couche (31) d'une première encre par sérigraphie à l'aide du premier écran maillé (11),
e. Former le premier motif (21) d'éléments d'obstruction partielle (211) par séchage de la première couche (31), puis
f. Positionner le deuxième écran maillé (12) de sorte qu'il repose, par une zone (1211) située entre deux ouvertures (121) adjacentes entre elles du deuxième écran maillé (12), sur chacun des éléments d'obstruction partielle (211) du premier motif (21) formé, chaque ouverture (121) du deuxième écran maillé (12) étant positionnée au droit d'une zone de la première face (101) du substrat (10) qui est exempte d'éléments d'obstruction partielle (211), puis
g. Imprimer une deuxième couche (32) d'une deuxième encre par sérigraphie à l'aide du deuxième écran maillé (12) tel que précédemment positionné, ladite deuxième encre étant électriquement conductrice,
h. Former le deuxième motif (22) de nervures (221) par séchage de la deuxième couche (32),
de sorte que les éléments d'obstruction partielle (211) soient répartis le long dudit au moins un canal d'écoulement (2) que définissent les nervures (221) du deuxième motif (22).

2. Procédé selon la revendication précédente, dans lequel la première encre est d'une composition différente de celle de la deuxième encre, de sorte que les éléments d'obstruction partielle (211) et les nervures (221) sont de compositions différentes entre elles.

3. Procédé selon l'une quelconque des revendications précédentes, dans lequel les premier et deuxième écrans maillés (11, 12) sont configurés de sorte que la première couche (31) telle qu'imprimée ait une épaisseur au plus égale à trois quart, de préférence sensiblement inférieure à la moitié, d'une épaisseur de la deuxième couche (32) telle qu'imprimée.

4. Procédé selon l'une quelconque des revendications précédentes, dans lequel, chaque écran maillé (11, 12) comprenant un maillage (112, 122) et une émulsion (113, 123),
• l'émulsion (113, 123) présente une épaisseur sensiblement comprise entre 100 et 200 µm, de préférence sensiblement comprise entre 100 et 150 µm, et encore plus préférentiellement sensiblement égale à 150 µm, et/ou
• le maillage (112, 122) présente une épaisseur sensiblement comprise entre 50 et 150 µm, de préférence sensiblement comprise entre 80 et 120 µm, et encore plus préférentiellement sensiblement égale à 100 µm.

5. Procédé selon l'une quelconque des revendications précédentes, dans lequel au moins une des ouvertures (111) du premier écran maillé (11) est d'une forme choisie parmi une forme rectangulaire, une forme triangulaire, une forme de goutte, et une forme ronde.

6. Procédé selon l'une quelconque des revendications précédentes, dans lequel, chaque écran maillé (11, 12) comprenant un maillage (112, 122) et une émulsion (113, 123), le deuxième écran maillé (12) est positionné sur le premier motif (21) de sorte qu'il repose sur chacun des éléments d'obstruction partielle (211) du premier motif (21) par au moins une partie de son émulsion (123).

7. Procédé selon l'une quelconque des revendications précédentes, dans lequel au moins l'impression de la deuxième couche (32) d'encre électriquement conductrice, de préférence l'impression de chaque couche (31, 32) d'encre, est réalisée en appliquant une contrainte de cisaillement sur cette couche, la viscosité de l'encre imprimée étant comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹.

8. Procédé de fabrication selon l'une quelconque des revendications précédentes, dans lequel le substrat (10) fourni comprend au moins l'un parmi une couche de diffusion gazeuse (120) du réacteur électrochimique, une couche d'électrode (110) du réacteur électrochimique et une plaque électriquement conductrice (130).

9. Procédé selon l'une quelconque des revendications précédentes, dans lequel, le substrat (10) fourni étant une plaque électriquement conductrice (130), les étapes a à h du procédé sont répétées sur la deuxième face (102) du substrat (10) pour y fabriquer un second guide d'écoulement (1') à canal structuré.

10. Procédé de fabrication d'une plaque bipolaire (3) pour réacteur électrochimique, et en particulier pour pile à combustible à membrane échangeuse de protons, comprenant :
• la fabrication, par un procédé de fabrication selon l'une quelconque des revendications précédentes, d'au moins trois guides d'écoulement (1, 1', 1") à canal structuré sur au moins deux substrats (10, 10', 10"), et
• au moins un assemblage desdits au moins deux substrats (10, 10', 10") entre eux de sorte que l'assemblage présente un desdits au moins trois guides d'écoulement (1') entre deux desdits au moins deux substrats (10, 10', 10") et deux autres desdits au moins trois guides d'écoulement (1, 1") de part et d'autre desdits au moins deux substrats (10, 10', 10").

11. Guide d'écoulement (1, 1') à canal structuré pour réacteur électrochimique comprenant au moins un canal d'écoulement (2) supporté par une première face (101) d'un substrat (10) et délimité par des nervures (211) constituées à base d'un premier matériau électriquement conducteur, le canal d'écoulement (2) étant structuré par une pluralité d'éléments d'obstruction partielle répartis le long du canal d'écoulement (2) et constitués à base d'un deuxième matériau, les premier et deuxième matériaux étant différents entre eux.

12. Guide d'écoulement (1, 1') selon la revendication précédente, comprenant en outre au moins un deuxième canal d'écoulement (2') supporté par une deuxième face (102) du substrat (10) et délimité par des nervures (211) constituées à base d'un premier matériau électriquement conducteur, ledit au moins un deuxième canal d'écoulement (2') étant structuré par une pluralité d'éléments d'obstruction partielle répartis le long du canal d'écoulement (2') et constitués à base d'un deuxième matériau, les premier et deuxième matériaux étant différents entre eux.

13. Plaque bipolaire pour réacteur électrochimique, et en particulier pour pile à combustible à membrane échangeuse de protons, comprenant :
• au moins trois guides d'écoulement (1, 1', 1") dont au moins un guide d'écoulement à canal structuré selon l'une quelconque des revendications 11 et 12 et
• au moins deux substrats (10, 10', 10") supportant chacun au moins un desdits au moins trois guides d'écoulement (1, 1', 1"),
lesdits au moins deux substrats (10, 10', 10") étant assemblés entre eux de sorte que l'assemblage présente un desdits au moins trois guides d'écoulement (1') entre deux desdits au moins deux substrats (10, 10', 10") et deux autres desdits au moins trois guides d'écoulement (1, 1") de part et d'autre desdits au moins deux substrats (10, 10', 10").
